Europäisches Patentamt

European Patent Office

Office européen des brevets

(19) 

(11) Veröffentlichungsnummer: **0 110 867**
**B1**

(12) # EUROPÄISCHE PATENTSCHRIFT

(45) Veröffentlichungstag der Patentschrift:
16.12.87

(51) Int. Cl.⁴: **G 21 C 17/00,** G 21 C 13/00

(21) Anmeldenummer: 83890191.6

(22) Anmeldetag: 27.10.83

(54) Verfahren zum Nachweis des Übertrittes von radioaktiver Strahlung aus radioaktiv strahlende Substanzen enthaltenden Anlagen.

(30) Priorität: 25.11.82 AT 4291/82

(43) Veröffentlichungstag der Anmeldung:
13.06.84 Patentblatt 84/24

(45) Bekanntmachung des Hinweises auf die Patenterteilung:
16.12.87 Patentblatt 87/51

(84) Benannte Vertragsstaaten:
BE CH DE FR GB IT LI NL SE

(56) Entgegenhaltungen:
DE-A-2 633 464
FR-A-2 360 155
FR-A-2 386 105
GB-A-868 672

POPULAR MECHANICS, Band 123, Nr. 2, Februar 1965, Seite 12
Schreiben des Atominstituts der Österreichischen Universitäten Wien vom 03.12.1986
Radiat. Bot. (Sept. 1975) v. 15(3) p. 231-240
ORO - 747, 3. Jul. 1975, 40 p. Availability: INIS. US (Report)
Radat. Bot. (Dec. 1975) v. 15(4) p. 405-409
Enterprise Forest, Volume II, Radioecological studies, TID--26113-P2, 1977, p. 69-78
Radiobiol. Radiother. ISSN 0033-8184, CODEN: RDBGA: (1986) v. 27(2) p. 171-182
Proc. Indian Acad. Sci., Sect. B. (May 1978), v. 87(5)

(73) Patentinhaber: Urdl, Franz, Wendtstattgasse 9/98/7/24, A-1100 Wien X (AT)

(72) Erfinder: Urdl, Franz, Wendtstattgasse 9/98/7/24, A-1100 Wien X (AT)

(74) Vertreter: Krause, Ernst, Dipl.- Ing., Dipl.- Ing. Krause, Ernst Dipl. Ing. Casati, Wilhelm Patentanwälte Amerlingstrasse 8, A-1061 Wien (AT)

(56) Entgegenhaltungen: (Fortsetzung)
p. 129-133

EP 0 110 867 B1

LIBER, STOCKHOLM 1987

## Beschreibung

Anlagen, in welchen radioaktive Substanzen gelagert oder gehandhabt werden, z. B. Atomkraftwerke oder andere Anlagen zur friedlichen Nutzung der Kernenergie, waren bisnun mit Mängel behaftet.

Das Sicherheitsrisiko, mit welchem ältere Atomkraftwerke (etwa aus den Jahren 1956 - 1960) zugelassen wurden, war höher als es nunmehr nach etwa 20 jähriger Betriebserfahrung, ist. Immer jedoch ist die Zulassung von derartigen Anlagen von Seiten der Behörden mit besonderen Auflagen verbunden.

Beim Betrieb von Atomkraftwerken traten häufig auch größere Störfälle auf, die zu Betriebsausfällen führten, welche sich über Monate erstreckten, in manchen Fällen sogar eine vorzeitige Stillegung des Atomkraftwerkes verursachten. Beim Betrieb von Atomkraftwerken ist es bereits zu größeren Unfällen, z. B. in Amerika, Westdeutschland, wahrscheinlich auch in den Oststaaten gekommen, deren Ursache verschiedenster Art sein kann, etwa menschliches, technologisches oder konstruktives Versagen. Unter Umständen können aber auch Unfälle durch Einwirkung sogenannter höherer Gewalt, etwa Bombenabwurf, Erdbeben u.dgl. auftreten. Nicht ausgeschlossen ist auch ein Katastrophenfall, verursacht durch das Durchbrennen des Reaktorkernes, ein sogenannter Gau. Während etwa die Wahrscheinlichkeit eines Gau vor etwa 20 Jahren noch auf 1: 100 000 prognostiziert wurde, mußte in neuerer Zeit die Wahrscheinlichkeit eines Gau auf 1: 1000 zurückgenommen werden. Im Hinblick auf die hohen Temperaturen (etwa 20 000°C), die bei einem derartigen Gau auftreten, kommt es zu einem Durchbrennen der Bodensicherheitseinrichtungen, und der Schmelzvorgang setzt sich in Richtung Erdmitte bis in das Erdreich fort.

Die Tiefe, bis zu welcher die Erdschale in Mitleidenschaft gezogen wird, hängt von der freiwerdenden Energie und der Zeit ab, während diese Energie einwirkt bzw. die Abkühlung, die auf natürliche Weise eintritt.

Bei Kavernenkraftwerken (DE-A 1 915 371), somit bei Bauwerken, die in den gewachsenen Grund, u.zw. sehr tief, gebaut werden, ist auf Grund der Bauweise ein natürlicher Strahlenschutz durch die Mächtigkeit des über den gegrabenen Hohlräumen befindlichen Gebirges gegeben. In vielen Gegenden verhindert jedoch der gewachsene Boden die Errichtung von Kavernenbauten, sodaß dort oberirdische Anlagen errichtet werden müssen und bei diesen Anlagen verstärkt ein Schutzbedürfnis auftritt, d.h. das Bedürfnis, sichtbar zu machen, ob aus dem Bauwerk radioaktive Substanzen bzw. überhaupt Strahlung an die Oberfläche, d.h. an die Umwelt, gelangen. Um derartige Strahlungen festzustellen, waren bisnun Geigerzähler eingesetzt, mit welchen die Umgebung solcher Bauten untersucht werden konnte. Für die Öffentlichkeit hatte dies den Nachteil, daß sie bei den Untersuchungen meist nicht anwesend sein konnte, so daß später verlautbarte Meßergebnisse dann auch auf Zweifel der Bevölkerung stießen, da diese Meßergebnisse für sie ja einerseits wenig aussagekräftig waren und vor allem nicht überprüft werden konnten.

Die Erfindung betrifft nun ein Verfahren zum Nachweis des Übertrittes von radioaktiver Strahlung aus radioaktivstrahlende Substanzen enthaltenden Anlagen, z. B. Reaktorbauwerke, Atomkraftwerksbauten u.dgl., in die Umwelt, unter Verwendung von Strahlungsindikatoren.

Durch die Erfindung soll nun eine Nachweismöglichkeit geschaffen werden, die praktisch allen die Möglichkeit gibt festzustellen, ob aus Teilen der Anlage radioaktive Substanzen oder radioaktive Strahlung in die Umwelt gelangten. Erreicht wird dies gemäß der Erfindung durch die im Kennzeichen des Hauptanspruchs erwähnten Merkmale.

Durch die Erfindung wird ein Beitrag zur Erhöhung der Sicherheit beim Betrieb von Anlagen, in welchen radioaktive Medien gehandhabt werden bzw. in welche derartige Medien eingebracht werden, geleistet.

Durch die DE-A 26 34 294 wurde es bekannt, eine Beschüttung bei Kraftwerksbauten vorzusehen. Diese Maßnahme, für sich betrachtet, reicht ja nicht aus, die hier gewünschte Nachweismöglichkeit zu schaffen. Vielmehr muß außer der Beschüttung noch ein weiterer Schritt getan werden, nämlich Pflanzen in den Bereich der Aufschüttung zu bringen.

Das erfindungsgemäße Verfahren ist vorwiegend ein biologisches Verfahren. Die Pflanzen werden hierbei als Indikatoren für auftretende radioaktive Strahlung an bestimmten, für solche Strahlungen besonders anfälligen Orten angeordnet, um solcherart eine technische Kontrolle über das Strahlungsverhalten zu schaffen. Hierbei sei erwähnt daß aus Popular Mechanics, Band 123, Nr 2, 2165, Seite 12 die Verwendung von Pflanzen als Strahlungsindikator an sich bekannt ist.

Nach Anwendung der erfindungsgemäßen Maßnahme kann die Bevölkerung sicher erhöhtes Vertrauen in die friedliche Nutzung der Kernenergie zur Erzeugung elektrischen Stromes in Kernkraftwerken setzen, da sich ja jedermann durch Beobachtung der Bepflanzung überzeugen kann, ob Veränderungen der Umwelt erfolgt sind oder nicht, u.zw. dadurch, daß man als Indikatoren für eine etwaige radioaktive Strahlung Pflanzen einsetzt. Sterben die Pflanzen ab, so ist dann der Lebensraum des Menschen gefährdet. Selbst ein Unfall mit Austritt radioaktiver Strahlen aus solchen Bauwerken wäre nachweisbar und könnte nicht verschwiegen werden. Für die Bevölkerung ist daher das Bauwerk nach außen so lange strahlungssicher, als sich keine sichtbare Veränderungen im Wuchs der Bepflanzungen zeigen.

Zur Bepflanzung können Gräser, Sträucher, Blumen, sogar Bäume verwendet werden. Insbesondere wird man hierbei solche Gewächse wählen, welche unter dem Einfluß radioaktiver Strahlung Veränderungen des Wachstums zeigen, also etwa wuchern oder zugrunde gehen. Solcherart ist es möglich, von außen sich jederzeit über den Zustand des Kraftwerkes zu informieren, was vor allem der Bevölkerung ein Gefühl der Sicherheit zu geben vermag, weil die Bevölkerung sonst nur auf die Verlautbarung von Meßergebnissen angewiesen ist, und erfahrungsgemäß derartigen Berichten eher skeptisch gegenübersteht.

Zum Zwecke einer Kontrolle muß die Bepflanzung von außen zugänglich gehalten werden. Auf dem Dach des Kraftwerkes kann hierbei ein frei zugängliches Glashaus errichtet werden, um auch dort die gewünschte Kontrolle jederzeit, also auch in Zeiten schlechter Witterung (Winter) vornehmen zu können. Eine Veränderung des Wachstums würde erst dann auftreten, wenn das Glashaus durch die Beschüttung hindurch mit radioaktiver Substanz, die aus dem Bauwerk strömt, verseucht werden würde. Die Beschüttung kann aus Lehm, Sand u.dgl. bestehen. Bei Atomkraftwerken wird vor allem jedoch das Reaktorgebäude, das meist auch den Maschinenraum enthält, mit einer Beschüttung versehen werden. Auch das relativ empfindliche Dach eines derartigen Bauwerkes wird dabei mit einer Beschüttung versehen werden. Es wird dabei zweckmässig sein, wenn man von der Quaderform des Bauwerkes abgeht und eine krumme Oberfläche, z. B. kugelförmige, parabolische oder dgl. Oberfläche wählt, da eine krumme Fläche erfahrungsgemäß leichter zu beschichten ist und auch optisch einen besseren Eindruck vermittelt, abgesehen von der höheren Festigkeit.

### Patentansprüche

1. Verfahren zum Nachweis des Übertrittes von radioaktiver Strahlung aus radioaktiv strahlende Substanzen enthaltenden Bauwerken, z. B. Reaktorbauwerken, Atomkraftwerksbauten u.dgl., in die Umwelt, unter Verwendung von Strahlungsindikatoren, dadurch gekennzeichnet, daß in an sich bekannter Weise zumindest jene Bauwerksteile, in welchen sich radioaktiv strahlende Medien befinden, bzw. in die radioaktiv strahlende Medien gebracht werden, z. B. der das Core aufnehmende Bauwerksteil, an der mit der Umwelt in Berührung gelangenden Oberfläche (Außenwandungen und Dach) mit Erde, Steinen u.dgl. Beschüttet werden und daß auf die Beschüttung unter dem Einfluß radioaktiver Strahlung Veränderungen der Erscheinungsform zeigende Pflanzen im Pflanzbehälter abgestellt werden oder daß als letzte Schicht der Beschüttung eine humusreiche, bzw. aus Humus bestehende, Schicht aufgetragen und mit diesen Pflanzen bepflanzt wird oder daß zumindest das Dach mit einer Bepflanzung, bestehend aus solchen Pflanzen, z.B. in Form von mit diesen Pflanzen bestückten Pflanzbehältern versehen wird, so daß für die Bevölkerung die Möglichkeit zum Beobachten der sichtbaren Veränderungen der Pflanzen besteht.

2. Verfahren nach Anspruch 1, dadurch gekennzeichnet, daß auf dem Dach des Bauwerkes ein Glashaus errichtet und mit unter dem Einfluß radioaktiver Strahlung Veränderungen der Erscheinungsform zeigenden Pflanzen bestückt wird und daß dieses Glashaus frei zugänglich ist.

### Claims

1. A method for indicating an emanation of radioactive radiation from building structures containing radioactively radiating substances, such as reactor buildings, nuclear power plant buildings and the like, into the environment, by means of radiation indicators, characterized in that earth, stones and the like is or are poured in known manner at least onto those parts of the building structures which contain radioactively radiating media or into which radioactively radiating media are introduced, such as that part of the building structure which accomodates the core, to cover that surface (exterior walls, roof) of said parts which contacts the environment, plants which change in appearance under the influence of radioactive radiation are placed in plant containers on the deposit or a high-humus layer or a layer consisting of humus is applied as the last layer of the deposit and is planted with such plants, or at least the roof is provided with such plants, e.g., in plant containers, so that the population has an opportunity to observe the visible changes of the plants.

2. A process according to claim 1, characterized in that a glasshouse is erected on the roof of the building and is provided with plants which change in appearance under the influence of radioactivity and said glasshouse is freely accessible.

### Revendications

1. Procédé pour la preuve du passage du rayonnement radioactif provenant des bâtiments contenant des substances de rayonnement radioactif, tels que des bâtiments de réacteur, des centrales atomiques et d'autres, à l'environnement, utilisant des indicateurs de rayonnement, caractérérisé en ce qu' au moins les parties des bâtiments, dans lesquelles se trouvent ou bien sont transportés des médiums radioactifs, p. e. la partie du bâtiment recevant l'âme, sont comblées de façon connue en soi de terre et de pierres sur les surfaces étant en contact avec l'environnement (parois extérieures et toit), et qu' on dispose, dans des jardinières, des plantes montrant des changements de leur état sous l'influence du rayonnement radioactif, sur ce remblai ou qu'on prévoit une couche riche en humus voire une couche de humus comme dernière couche du remblai ou bien qu' au moins le toit est pourvu d'une plantation consistant des plantes, p. e. sous forme des jardinières contenant de telles plantes, qui donnent à la population la possibilité d'observer les changements visibles sur les plantes.

2. Procédé selon la revendication 1, caractérisé en ce qu' on construit une serre sur le toit du bâtiment munie de plantes montrant des changements d' état sous l'influence du rayonnement radioactif et que cette serre est accesible à tout le monde.